# EUROPÄISCHE PATENTSCHRIFT

(11) **EP 2 671 467 B1**
(45) Veröffentlichungstag und Bekanntmachung des Hinweises auf die Patenterteilung: **10.10.2018**
(21) Anmeldenummer: 13170523.8
(22) Anmeldetag: 04.06.2013
(51) Int. Cl.: A47B 5/00, B60N 3/00, B64D 11/06

(54) **Tischanordnung**
Table assembly
Agencement de table

(30) Priorität: 04.06.2012 DE 102012209436
(43) Veröffentlichungstag der Anmeldung: 11.12.2013
(73) Patentinhaber: Fidlock GmbH, 30175 Hannover (DE)
(72) Erfinder: Fiedler, Joachim, 30175 Hannover (DE)
(74) Vertreter: Maikowski & Ninnemann Patentanwälte Partnerschaft mbB

(56) Entgegenhaltungen:
- WO-A1-2009/062974
- WO-A2-2011/094668
- DE-U1-202009 000 696

## Beschreibung

Die Erfindung betrifft eine Tischanordnung.

Die Erfindung betrifft insbesondere eine mechanische Verriegelung für einen Klapptisch zur Verwendung z.B. in Wohnmobilen, an Eisenbahnsitzen oder an Flugzeugsitzen bereitzustellen.

Herkömmliche Verriegelungen für Klapptische sind oft schwer zu bedienen. Eine erste häufig verwendete Bauform ist: Verriegelung durch einen Drehknebel, wobei beim Schließen drei Bedienungen nötig sind, nämlich erstens ein Stellen des Knebels in Offenstellung, zweitens ein Hochklappen des Tisches, drittens ein Stellen des Knebels in Schließstellung. Eine zweite häufig verwendete Bauform ist: Verriegelung durch eine federbelastete Schiebefalle mit Anschrägung nach dem Türschlossprinzip. Hier drückt der Tisch beim Schließen gegen die Anschrägung und lenkt dadurch die Schiebefalle aus, bis in Endstellung die Schiebefalle über den Tisch rastet. Nachteil dieser Lösung ist, dass jede Erhöhung der Stabilität der Schiebefalle - eine Vergrößerung des Hinterschnitts, bzw. härtere Rückstellfeder - sich auf die Bedienbarkeit beim Schließen oder Öffnen direkt negativ auswirkt.

Bei einer aus der DE 20 2009 000 696 U1 bekannten Halterung für eine Tischanordnung ist einer Aufnahmevorrichtung zur schwenkbaren Aufnahme einer Tischplatte und eine Haltevorrichtung zur lösbaren Festlegung der Tischplatte an der Rückseite eines Fahrzeugsitzes vorgesehen.

Aus der WO 2011/094668 A2 ist eine Rücksitzanordnung mit einem schwenkbaren Tisch bekannt, der über eine Rasteinrichtung in einer aufgeklappten Stellung verrastet werden kann.

Aufgabe der Erfindung ist es, einen Tisch mit einer zuverlässigen Verriegelung bereitzustellen, die einfach zu schließen und auch einfach wieder zu öffnen ist.

Diese Aufgabe wird durch einen Gegenstand mit den Merkmalen des Anspruchs 1 gelöst.

Ein Tisch ist schwenkbar um eine z.B. an einem (bezogen auf einen bestimmungsgemäßen Einbau) an einem unteren Ende angebrachte Schwenkachse an einem Basisteil, z.B. an einer Rückenlehne, gelagert. Die Verriegelungsvorrichtung wirkt zwischen einem freien Ende des Tisches und dem Basisteil, um den Tisch in einer Schließstellung verriegelnd in einer dem Basisteil angenäherten Stellung zu halten oder zum Verschwenken des Tischs aus der Schließstellung heraus freizugeben. Die Verriegelungsvorrichtung besteht aus einem bewegbaren, z.B. verschieblich gelagerten Verriegelungsteil, das in einer Öffnungsrichtung von einer Schließposition in eine Offenposition bewegbar ist. Am Verriegelungsteil sind ein oder mehrere Verriegelungselemente vorgesehen, die beim Schließvorgang durch Annäherung des Tischs an das Basisteil in eine Schließrichtung in ein oder mehrere vorzugsweise tischseitig angebrachte Hinterschnitte einrasten, indem die Verriegelungselemente quer zur Schließrichtung beiseite gedrängt werden.

Zum Schließen wird der Tisch verschwenkt und so der Hinterschnitt dem Verriegelungsteil in eine Schließrichtung angenähert, bis das Verriegelungselement rastend mit dem Hinterschnitt in Eingriff gelangt. Dabei weichen das Verriegelungselement und/oder der Hinterschnitt entlang einer Ausweichrichtung elastisch gegeneinander aus, so dass das Verriegelungselement und der Hinterschnitt entlang der Schließrichtung aneinander vorbei bewegt werden und miteinander in Eingriff gelangen können. Das Verriegelungsteil steht in der Schließstellung mit seinem Verriegelungselement mit dem Hinterschnitt in Eingriff. Zum Öffnen wird das Verriegelungsteil in eine von der Ausweichrichtung unterschiedliche Öffnungsrichtung bewegt, um das Verriegelungselement und den Hinterschnitt außer Eingriff voneinander zu bringen.

Die Öffnungsrichtung, die Schließrichtung und die Ausweichrichtung sind jeweils voneinander unterschiedlich. Hierunter ist vorliegend zu verstehen, dass die Richtungen jeweils einen von 0° und 180° unterschiedlichen Winkel zu den übrigen Richtungen beschreiben und somit weder parallel noch antiparallel zu den übrigen Richtungen gerichtet sind.

Das Verriegelungselement und/oder der Hinterschnitt sind entlang der Ausweichrichtung elastisch federnd angeordnet. Zumindest eines dieser Bauteile kann damit elastisch federnd entlang der Ausweichrichtung ausweichen. Hierbei können das Verriegelungselement und/oder der Hinterschnitt selbst elastisch ausgebildet sein. Oder das Verriegelungselement und/oder der Hinterschnitt sind elastisch mittels eines geeigneten Vorspannelements, beispielsweise eine mechanische Feder, die Schwerkraft oder ein magnetisches Vorspannmittel, vorgespannt.

Das Verriegelungsteil kann beweglich an dem Basisteil oder dem Tisch angeordnet sein. Der Hinterschnitt ist entsprechend an dem jeweils anderen Bauteil, also an dem Tisch oder dem Basisteil angeordnet. Vorzugsweise jedoch sind das Verriegelungsteil beweglich an dem Basisteil, beispielsweise einer Rückwand eines Sitzes, und der Hinterschnitt an dem Tisch angeordnet.

Beim Öffnen und Schließen läuft ein Bewegungskreislauf ab: Beim Schließen steht das Verriegelungsteil, durch eine Rückstellfeder zurückgestellt, in der Schließposition und wird nicht bewegt. Zum Schließen wird der Tisch hochgeklappt, bis die Verriegelungselemente Kontakt zu den Hinterschnitten bekommen, so dass die Verriegelungselemente und/oder die Hinterschnitte entlang der Ausweichrichtung beiseite gedrückt werden und schließlich ineinander einschnappen, so dass der Tisch verriegelt ist. Zum Öffnen wird das Verriegelungsteil in Öffnungsrichtung so weit verschoben, bis die Verriegelungselemente außer Eingriff mit den Hinterschnitten gelangen. Das Schließen und das Öffnen laufen also nicht spiegelverkehrt ab.

Ein Bediener erfährt beim Schließen den Widerstand der Federkraft der Verriegelungselemente und/oder der Hinterschnitte, die beim Einrasten überwunden werden muss. Beim Öffnen erfährt der Bediener den Widerstand der Federkraft der Rückstellfeder des Verriegelungsteils. Beide Federn können individuell auf die Anwendung abgestimmt werden. So kann eine möglichst schwache Feder im Verriegelungselement und/oder Hinterschnitt gewählt werden, um den Tisch so mühelos wie möglich einrasten zu lassen. Es kann die Rückstellfeder des Verriegelungsteils aber auch relativ stark dimensioniert werden, um ein unbeabsichtigtes Öffnen oder ein Öffnen durch Erschütterungen eines Unfall-Crashes zu verhindern.

Es können ein oder mehrere Führungselemente vorgesehen sein, die beim Schließen des Tisches spätestens ab dem ersten Kontakt des Verriegelungsteils mit dem tischseitigen Hinterschnitt den Tisch relativ zum Basisteil derart führen, dass der Tisch nicht quer zur Schließrichtung ausweichen kann und die Hinterschnitte somit den Verriegelungselementen in geführter Weise angenähert werden, bis sie in Eingriff mit den Verriegelungselementen schnappen

Das Schließen kann durch ein Magnetsystem unterstützt werden, wobei im Tisch ein magnetischer Anker oder ein Magnet und an dem Basisteil, zum Beispiel der Rückwand einer Rückenlehne, oder am Verriegelungsteil ein Magnet angebracht sind, die so stark dimensioniert sein können, dass die Verriegelungselemente und/oder Hinterschnitte durch die Magnetkraft beiseite gedrückt werden können, d.h. die Verriegelungsvorrichtung unterhalb eines gewissen Mindestabstands automatisch geschlossen wird. Beim Öffnen kann ein am Verriegelungsteil angebrachter Magnet derart beim Verschieben des Verriegelungsteils mit verschoben werden, dass die Anziehungskraft zwischen dem im Tisch angebrachten Anker oder Magnet und dem im Verriegelungsteil angebrachten Magnet abnimmt.

Die Lagerung des Tisches kann auch über doppelt verschwenkbare Verbindungsglieder erfolgen.

Das Verriegelungsteil kann drehbar sein.

Das Verriegelungsteil kann schwenkbar sein.

Das Verriegelungsteil kann linear verschiebbar sein.

Es können ein Verriegelungselement oder mehrere Verriegelungselemente am Verriegelungsteil vorgesehen sein.

Es können mehrere Verriegelungsvorrichtungen vorgesehen sein. Eine besonders stark gegen unbeabsichtigtes Öffnen gesicherte Ausführungsform kann durch Verwendung von zwei einzeln zu verschiebenden Verriegelungsteilen verwirklicht sein. Eine komfortabel zu öffnende Bauform kann durch zwei Verriegelungsteile erreicht werden, die gekoppelt verschiebbar sind.

Statt eines mechanischen Federelements können zur Verwirklichung der Rückstellfeder auch andere vorspannende Mittel, z.B. unter Ausnutzung der Gravitation, magnetische Vorspannmittel oder allgemein elastische Vorspannmittel, verwendet werden.

Der der Erfindung zugrunde liegende Gedanke soll nachfolgend anhand der in den Figuren dargestellten Ausführungsbeispiele näher erläutert werden. Es zeigen:
- Fig. 1a-1e: Ansichten eines ersten Ausführungsbeispiels eines Klapptischs mit drehbarem Verriegelungsteil in einer Phase der Annäherung an eine Rückwand eines Sitzes in eine Schließrichtung, kurz bevor die Verriegelungselemente einrasten;
- Fig. 2a-2e: Ansichten des Klapptischs in einer Phase der Verriegelung, während Verriegelungselemente an Hinterschnitten beiseite gedrückt werden;
- Fig. 3a-3e: Ansichten des Klapptischs in einer Phase nach erfolgter Verriegelung, nachdem die Verriegelungselemente hinter die Hinterschnitte eingerastet sind;
- Fig. 4a-4e: Ansichten des Klapptischs in einer Phase der Öffnung, bei der das Verriegelungsteil in eine Öffnungsrichtung verdreht worden ist, bis die Verriegelungselemente außer Eingriff mit den Hinterschnitten gelangt sind;
- Fig. 5: eine vergrößerte Ansicht der Ansicht gemäß Fig. 4b;
- Fig. 6a: die Ansicht gemäß Fig. 2c;
- Fig. 6b: eine Schnittansicht entlang der Linie E-E gemäß Fig. 6a;
- Fig. 7a: die Ansicht gemäß Fig. 3c;
- Fig. 7b: eine Schnittansicht entlang der Linie E-E gemäß Fig. 7a;
- Fig. 8a: eine Frontalansichten eines weiteren Ausführungsbeispiels einer Tischanordnung, in einer Schließposition;
- Fig. 8b: eine Schnittansicht entlang der Linie A-A gemäß Fig. 8a;
- Fig. 8c: eine Schnittansicht entlang der Linie B-B gemäß Fig. 8a;
- Fig. 9a: eine Frontalansicht der Tischanordnung, in einer Offenposition;
- Fig. 9b: eine Schnittansicht entlang der Linie A-A gemäß Fig. 9a; und
- Fig. 9c: eine Schnittansicht entlang der Linie B-B gemäß Fig. 9a.

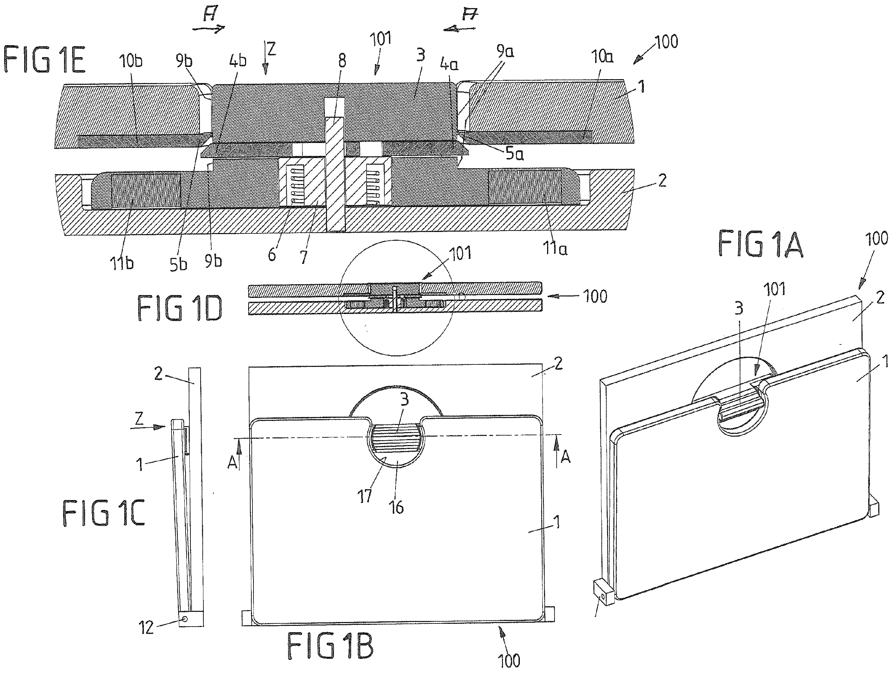

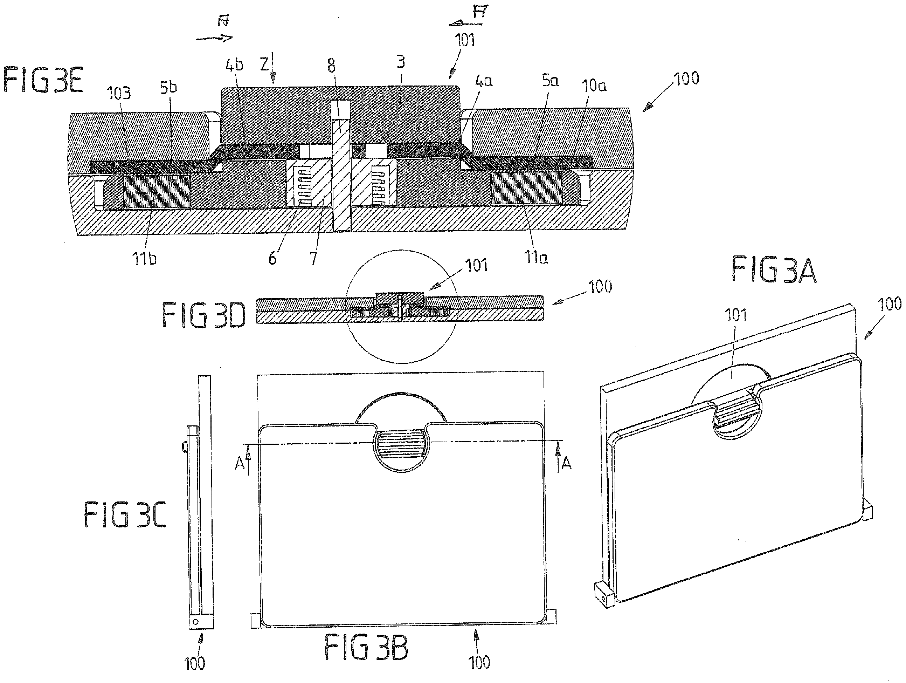

In Fig. 1a-1e bis 4a-4e zeigen
- die Ansicht a (Fig. 1a, 2a, 3a, 4a) jeweils eine perspektivische Ansicht,
- die Ansicht b (Fig. 1b, 2b, 3b, 4b) eine Frontalsicht,
- die Ansicht c (Fig. 1c, 2c, 3c, 4c) eine Seitenansicht,
- die Ansicht d (Fig. 1d, 2d, 3d, 4d) eine Schnittansicht entlang der Linie A-A gemäß Ansicht b (Fig. 1b, 2b, 3b, 4b) und
- die Ansicht e (Fig. 1e, 2e, 3e, 4e) eine Ausschnittsvergrößerung in dem in Ansicht d (Fig. 1d, 2d, 3d, 4d) eingezeichneten Ausschnitt.

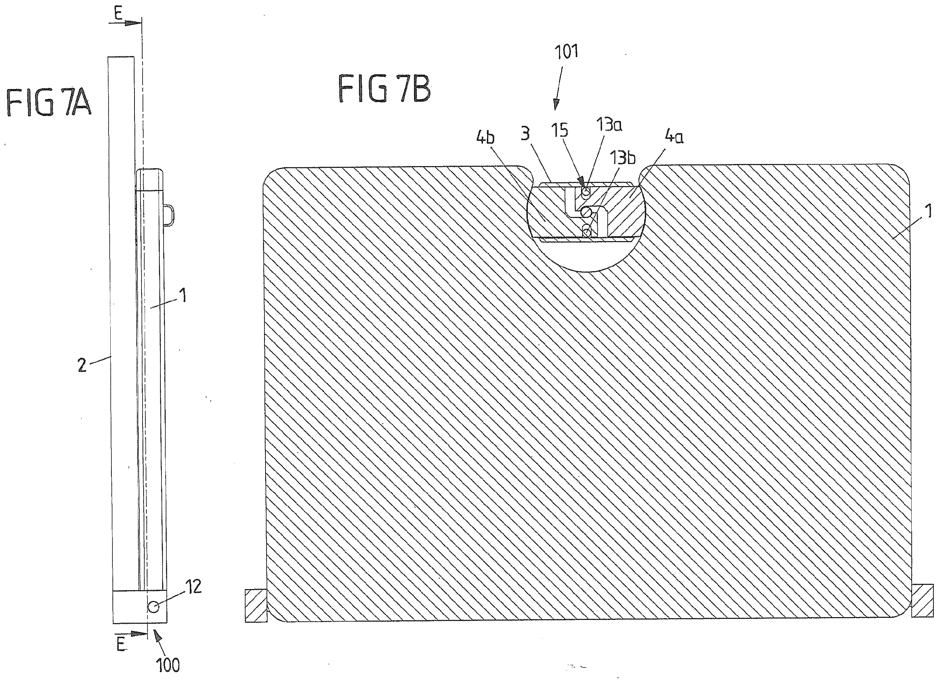

Fig. 1a-1e bis 7a, 7b zeigen ein erstes Ausführungsbeispiel einer Tischanordnung 100 mit einem Tisch 1 mit einem drehbarem Verriegelungsteil 3 beim Schließen und beim Öffnen.

Das Verriegelungsteil 3 ist Bestandteil einer Verrieglungsvorrichtung 101 zum Halten des Tischs 1 in einer angenäherten Stellung an einer Rückwand 2 eines Sitzes. Der Klapptisch 1 ist um eine Schwenkachse 12 schwenkbar an Der ein Basisteil verwirklichenden Rückwand 2 des Sitzes gelagert.

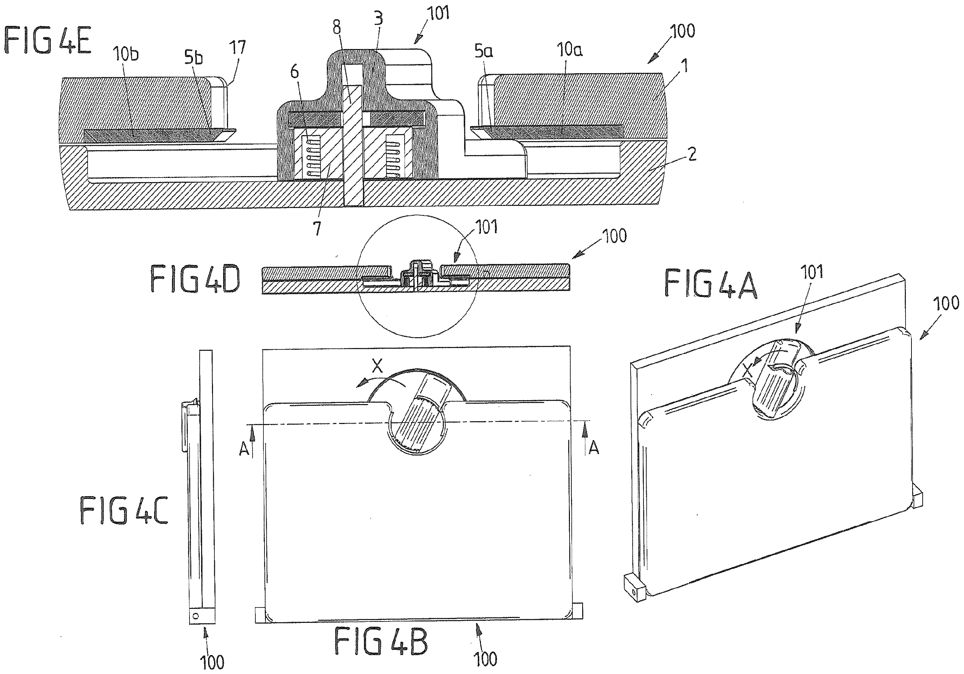

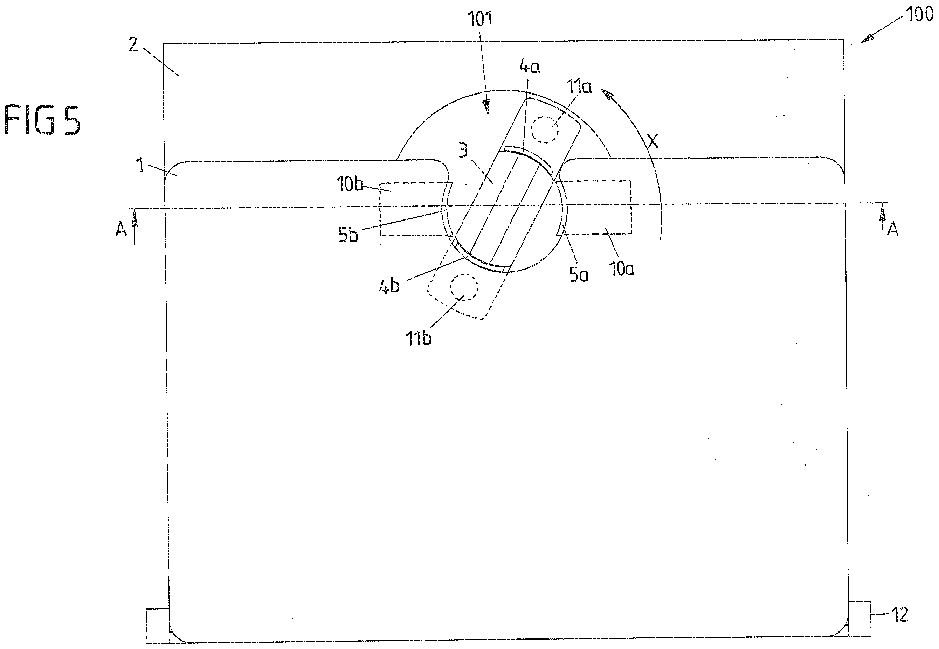

An der Rückwand 2 ist ein Verriegelungsteil 3 um eine Achse 8 drehbar gelagert. Die Drehbarkeit des Verriegelungsteils 3 ist so durch (nicht gezeichnete) Anschläge begrenzt, dass das Verriegelungsteil 3 von einer Schließposition (Fig. 1, 2, 3) in eine Offenposition (Fig. 4, 5) drehbar ist. Eine Rückstellfeder 6 stellt das Verriegelungsteil nach erfolgter Betätigung selbstständig wieder in die Schließposition zurück.

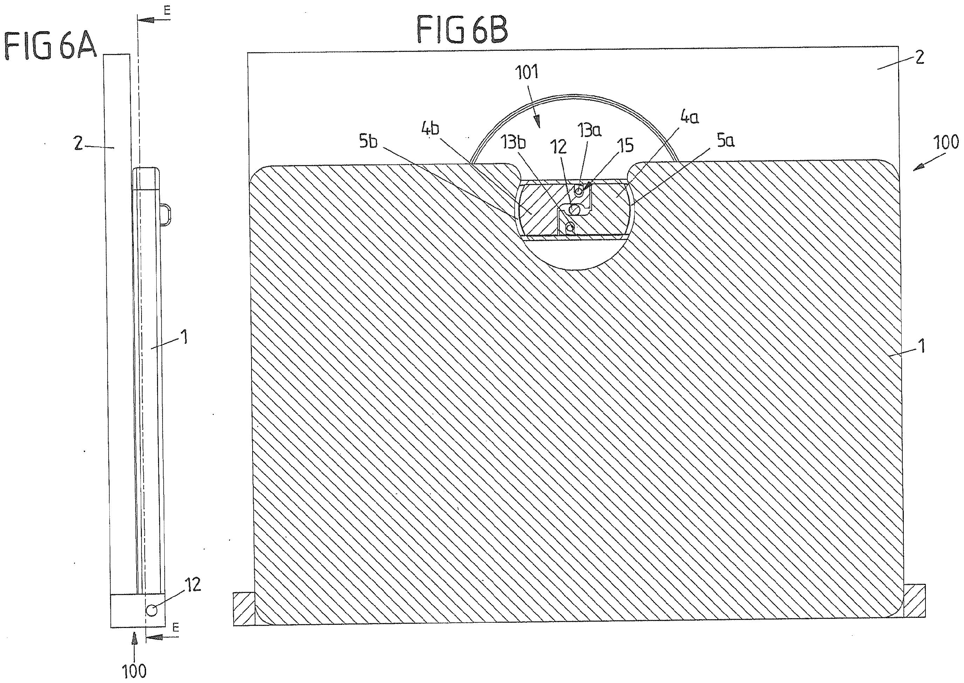

Verriegelungselemente 4a, 4b sind am Verriegelungsteil 3 verschieblich gelagert (siehe z.B. Fig. 6b). Sie sind federbelastet und in ihrem Verschiebeweg spiegelbildlich gekoppelt durch Mitnehmerstifte 13a, 13b eines Federgehäuses 7, die in Mitnehmerausnehmungen 14a, 14b der Verriegelungselemente 4a, 4b eingreifen. In dem Federgehäuse 7 (siehe Fig. 1e) ist die Rückstellfeder 7 eingefasst.

Die Rückstellfeder 6 ist dazu ausgebildet, das Verriegelungsteil 3 und das damit gekoppelte Federgehäuse 7 nach erfolgtem Öffnen zurückzustellen. Das Federgehäuse 15 stellt dadurch die Verriegelungselemente 4a, 4b in eine ausgefahrene Stellung zurück. Damit erfüllt die Rückstellfeder 6 eine Doppelfunktion, die darin besteht, die Verriegelungselemente 4a, 4b vorzuspannen und das Verriegelungsteil in die Schließposition zurückzustellen.

Am Tisch 1 sind im Bereich einer Aussparung 16 zwei tischseitige Hinterschnitte 5a, 5b angebracht. Die Hinterschnitte 5a, 5b springen von einem Innenumfang 17 der Aussparung 16 radial nach innen vor und sind gegenüberliegend an dem Innenumfang 17 der Aussparung 16 angeordnet.

In der gezeichneten Ausführungsform sind die tischseitigen Hinterschnitte 5a, 5b einstückig mit Magnetankern 10a, 10b (siehe Fig. 1e) ausgeführt. Sie können in einer alternativen, nicht gezeichneten Ausführungsform aber auch durch den Tisch 1 selbst gebildet sein.

Die gezeichneten Phasen können im Einzelnen wie folgt erläutert werden:
In der Schließphase gemäß Fig. 1a-1e wird der Tisch 1 der Rückwand 2 mit dem daran angeordneten Verriegelungsteil 3 in eine Schließrichtung Z angenähert. Dabei wird der Tisch 1 in der letzten Phase der Schließbewegung (siehe Fig. 1e) präzise mit enger Toleranz zwischen den tischseitigen Hinterschnitten 5a, 5b und Führungsabschnitten 9a, 9b am Verriegelungsteil 3 geführt. Die Führungsabschnitte 9a, 9b bewirken auch, dass nach dem Schließen nach erfolgtem Einrasten der Verriegelungselemente 4a, 4b mit den Hinterschnitten 5a, 5b der Tisch 1 sich nicht durch eine seitlich auf den Tisch 1 aufgebrachte Kraft seitlich verschieben kann und sich die Verriegelungselemente 4a, 4b somit sich nicht unbeabsichtigt aus den tischseitigen Hinterschnitten 5a, 5b lösen können.

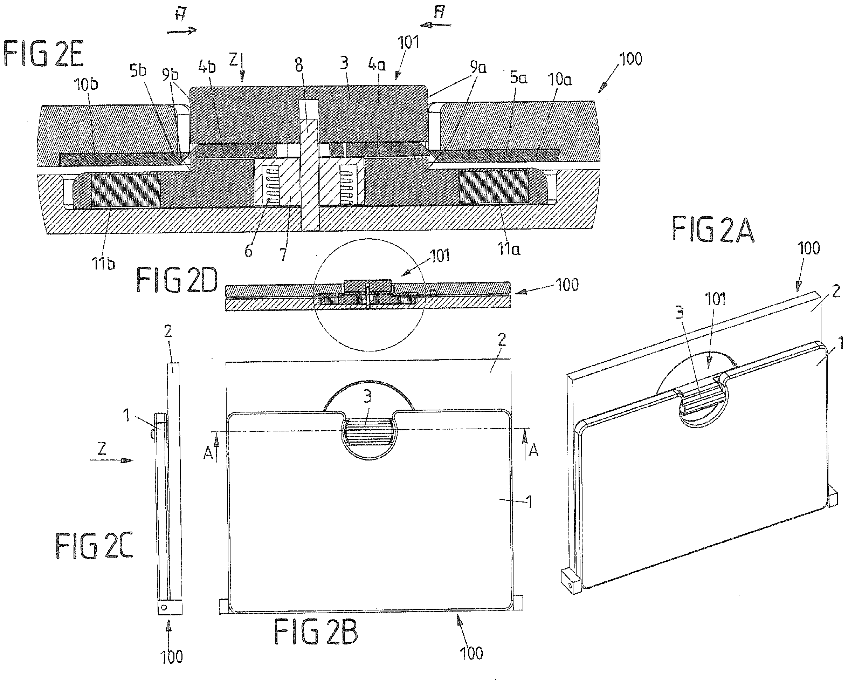

In Fig. 2a-2e wurden nach weiterer Annäherung von Tisch 1 und Rückwand 2 in Richtung Schließrichtung Z die Verriegelungselemente 4a, 4b durch die tischseitigen Hinterschnitte 5a, 5b durch Auflaufschrägen gegen die Kraft der Rückstellfeder 6 in eine Ausweichrichtung A beiseite gedrückt.

In Fig. 3a-3a ist die Schließung vollendet: die Verriegelungselemente 4a, 4b und die tischseitigen Hinterschnitte 5a, 5b sind eingerastet.

In Fig. 4a-4e ist die erfolgte Öffnung gezeigt. Das Verriegelungsteil 3 wurde so weit um die Achse 8 in eine Öffnungsrichtung X in eine Offenposition gedreht, dass die Verriegelungselemente 4a, 4b tangential außer Eingriff mit den tischseitigen Hinterschnitten 5a, 5b geschoben wurden.

Die Öffnungsrichtung X ist hierbei unterschiedlich von der Ausweichrichtung A und auch von der Schließrichtung Z.

Das Verriegelungsteil 3 wird von der Rückstellfeder 6 nach erfolgter Betätigung wieder in Schließposition zurückgestellt.

Fig. 5 zeigt in vergrößerter Ansicht die Ansicht gemäß Fig. 4b. Es ist gezeigt, wie die Verriegelungselemente 4a, 4b außer Eingriff mit den tischseitigen Hinterschnitten 5a, 5b gelangt sind, ohne dass dabei die Verriegelungselemente 4a, 4b gegen die Federkraft zurückgedrängt wurden.

In einem anderen Ausführungsbeispiel werden die Verriegelungselemente 4a, 4b während der Bewegung des Verriegelungsteils 3 von der Offenposition in die Schließposition allmählich durch kraftumlenkende Elemente zurückgedrängt. Die zum öffnen benötigte Kraft ist daher bei diesem Ausführungsbeispiel um die Kraft der Federauslenkung der Verriegelungselemente 4a, 4b größer als in dem vorangehend beschriebenen Ausführungsbeispiel.

Fig. 6a und 6b zeigen in einer Seitenansicht und einer Schnittansicht die Phase nach Fig. 2a-2e, während der die Verriegelungselemente 4a, 4b durch die tischseitigen Hinterschnitte 5a, 5b beiseite gedrängt werden. Dabei werden die in den Mitnehmerausnehmungen 14a, 14b geführten Mitnehmerstifte 13a, 13b gegen die Kraft der Rückstellfeder 6 zurückgedrückt. Diese Anordnung synchronisiert einerseits die Bewegung der Verriegelungselemente 4a, 4b. Andererseits verwirklicht die Anordnung eine kostengünstige Doppelnutzung der Rückstellfeder 6.

Fig. 7a, 7b zeigen die Verriegelungselemente 4a, 4b nach erfolgtem Einrasten hinter die Hinterschnitte 5a, 5b.

In einem anderen Ausführungsbeispiel kann die Verschiebung in Öffnungsrichtung auch eine lineare Verschiebung oder ein Verschwenken parallel zur Schwenkachse sein.

In einer vorteilhaften Weiterentwicklung sind am Verriegelungsteil 3 Magnete 11a, 11b so angebracht, dass sie nach erfolgtem Einrasten der Verriegelungselement 4a, 4b hinter die Hinterschnitte 5a, 5b gegenüber von Magnetankern 10a, 10b an dem Tisch 1 zu liegen kommen. Sie können vorteilhafterweise so dimensioniert sein, dass sie selbsttätig die Rastung überwinden, d.h. der Tisch 1 selbsttätig schließt ab einer gewissen Mindestannäherung.

In Fig. 5 ist dargestellt, wie nach erfolgter Betätigung des Verriegelungsteils 3 in Öffnungsrichtung X in die Offenstellung die Magnete 11a, 11b und die Magnetanker 10a, 10b seitlich voneinander abgeschert sind und damit die magnetische Anziehung nahezu aufgehoben ist, so dass der Tisch 1 einfach geöffnet werden kann.

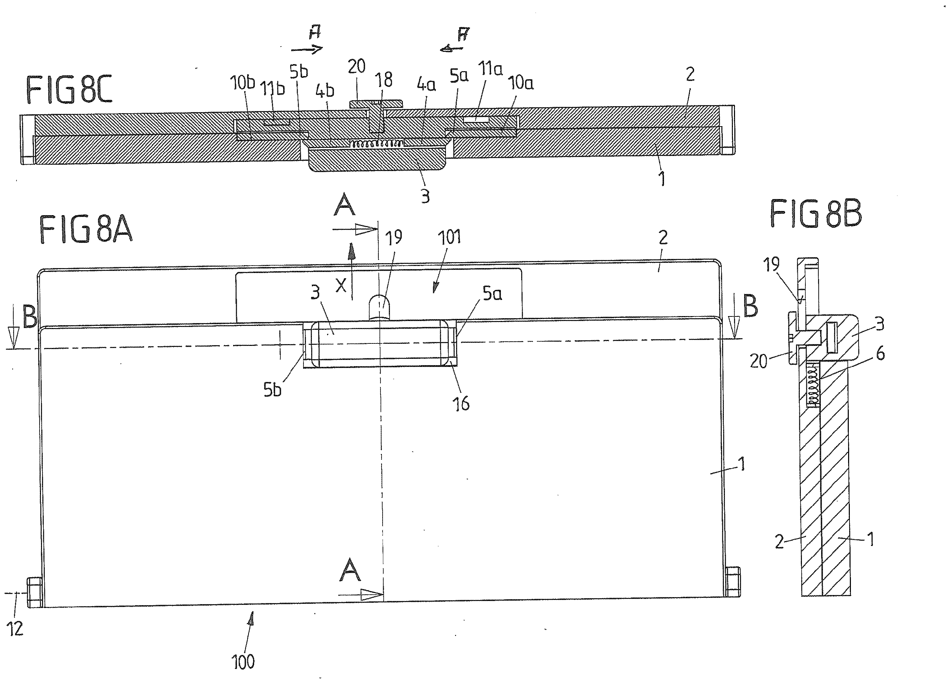

Bei einem weiteren, in Fig. 8a-8c bis 9a-9c dargestellten Ausführungsbeispiel weist eine Tischanordnung 100 einen um eine Schwenkachse 12 verschwenkbar an einem Basisteil in Form einer Rückwand 2 eines Sitzes angeordneten Tisch 1 auf, der in einer in Fig. 8a-8c dargestellten Schließposition über eine Verriegelungsvorrichtung 101 an der Rückwand 2 gehalten ist.

Im Unterschied zu dem vorangehend anhand von Fig. 1 bis 7 beschriebenen Ausführungsbeispiel weist die Verriegelungsvorrichtung 101 ein Verriegelungsteil 3 auf, das linear in eine geradlinige Öffnungsrichtung X verschiebbar an der Rückwand 2 angeordnet ist.

Das Verriegelungsteil 3 ist über ein Führungselement 20, das ein Langloch 19 der Rückwand 2 durchgreift, entlang der Öffnungsrichtung X verschiebbar an der Rückwand 2 geführt. Zum Überführen des Tischs 1 in seine in Fig. 8a-8c dargestellte Schließposition wird der Tisch 1 aus einer vorgeklappten Stellung um seine Schwenkachse 12 verschwenkt und dadurch der Rückwand 2 angenähert. Das Schließen erfolgt dabei analog wie vorangehend beschrieben, indem das Verriegelungsteil 3 mit daran angeordneten Verriegelungselementen 4a, 4b mit Hinterschnitten 5a, 5b des Tischs 1 rastend in Eingriff gebracht wird, so dass in der Schließposition das Verriegelungsteil 3 den Tisch 1 formschlüssig an der Rückwand 2 hält (siehe zum Beispiel Fig. 8c).

Die Verriegelungselemente 4a, 4b sind entlang einer Richtung quer zur Öffnungsrichtung X verschiebbar an dem Verriegelungsteil 3 angeordnet. Die Verriegelungselemente 4a, 4b sind dabei über eine Feder 18 gegeneinander vorgespannt, so dass die Verriegelungselemente 4a, 4b, nachdem sie die Hinterschnitte 5a, 5b beim Schließen passiert haben, nach außen gedrückt werden und dadurch formschlüssig in Eingriff mit den Hinterschnitten 5a, 5b schnappen.

An dem Verriegelungsteil 3 sind Magnete 11a, 11b angeordnet, die in der Schließposition in Gegenüberlage mit magnetischen Ankern 10a, 10b des Tischs 1 stehen, die einstückig mit den Hinterschnitten 5a, 5b ausgestaltet sind. Durch eine magnetische Anziehungskraft zwischen den Magneten 11a, 11b und den magnetischen Ankern 10a, 10b kann das Schließen der Verriegelungsvorrichtung 101 weitestgehend selbsttätig erfolgen, indem bei Annäherung des Tischs 1 an die Rückwand 2 das Verriegelungsteil 3 mit seinen Verriegelungselementen 4a, 4b selbsttätig oder zumindest nahezu selbsttätig in Eingriff mit den Hinterschnitten 5a, 5b des Tischs 1 gezogen wird.

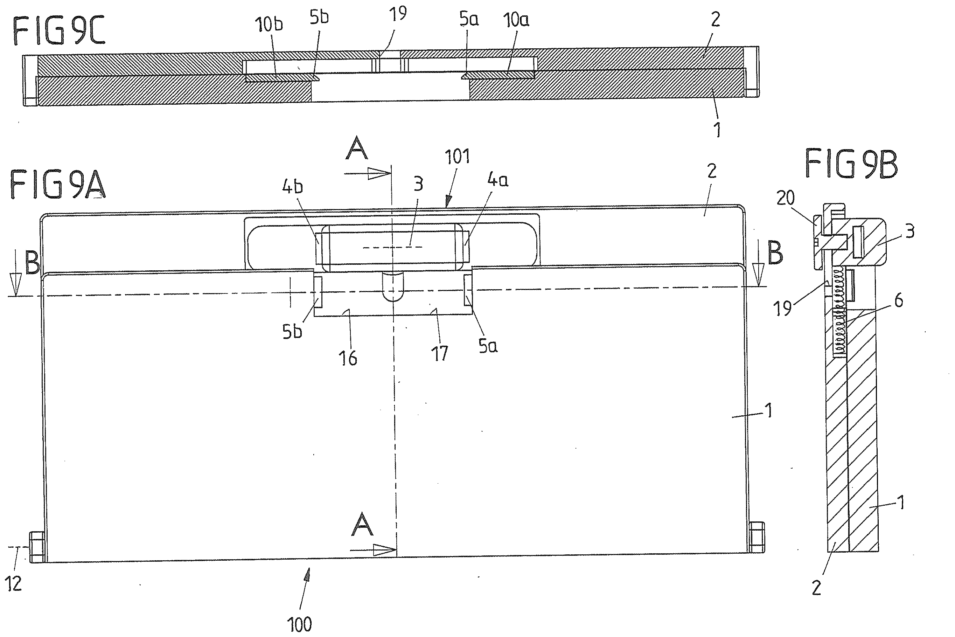

Zum Öffnen kann das Verriegelungsteil 3 entlang des Langlochs 19 in die Öffnungsrichtung X bewegt werden, wie dies in Fig. 9a-9c dargestellt ist. Durch das lineare Verschieben des Verriegelungsteils 3 werden die Verriegelungselemente 4a, 4b tangential zu den Hinterschnitten 5a, 5b bewegt, ohne dabei quer zur Öffnungsrichtung X nach innen gedrückt zu werden. In der geöffneten Stellung gemäß Fig. 9a-9c sind die Verriegelungselemente 4a, 4b außer Eingriff mit den Hinterschnitten 5a, 5b, so dass der Tisch 1 von der Rückwand 2 abgeklappt werden kann.

Das Verriegelungsteil 3 ist über eine Rückstellfeder 6 gegenüber der Rückwand 2 vorgespannt, so dass nach erfolgter Öffnung das Verriegelungsteil 3 zurück in seine Ausgangsstellung (entsprechend der Stellung gemäß Fig. 8a) gezogen wird und somit das Verriegelungsteil 3 zum erneuten Schließen der Verriegelungsvorrichtung 101 mit den Hinterschnitten 5a, 5b des Tischs 1 in Eingriff gebracht werden kann.

### Bezugszeichenliste

- 1: Klapptisch
- 2: Rückwand
- 3: Verriegelungsteil
- 4a, 4b: Verriegelungselemente
- 5a, 5b: Tischseitiger Hinterschnitt
- 6: Rückstellfeder
- 7: Federgehäuse
- 8: Drehachse
- 9a, 9b: Führungsabschnitt
- 10a, 10b: Magnetanker
- 11a, 11b: Magnet
- 12: Schwenkachse
- 13a, 13b: Mitnehmerstift
- 14a, 14b: Mitnehmerausnehmung
- 16: Aussparung
- 100: Tischanordnung
- 17: Innenumfang
- 18: Feder
- 19: Langloch
- 20: Führungsmittel
- A: Ausweichrichtung
- X: Öffnungsrichtung
- Z: Schließrichtung

## Patentansprüche

1. Tischanordnung (100), mit
- einem Basisteil (2),
- einem schwenkbar um eine Schwenkachse (12) an dem Basisteil (2) gelagerten Tisch (1) und
- einer Verriegelungsvorrichtung (101), die zwischen dem Basisteil (2) und dem Tisch (1) wirkt, um in einer Schließstellung den Tisch (1) in einer dem Basisteil (2) angenäherten Stellung zu halten und in einer geöffneten Stellung den Tisch (1) freizugeben, so dass der Tisch (1) um die Schwenkachse (12) in eine Gebrauchsstellung relativ zu dem Basisteil (2) verschwenkbar ist,
wobei die Verriegelungsvorrichtung (101) ein Verriegelungsteil (3), das beweglich an einem von Basisteil (2) und Tisch (1) angeordnet ist und das ein Verriegelungselement (4a, 4b) umfasst, und einen Hinterschnitt (5a, 5b), der an dem anderen von Basisteil (2) und Tisch (1) angeordnet ist, aufweist, wobei
- zum Schließen der Tisch (1) um die Schwenkachse (12) verschwenkt und so der Hinterschnitt (5a, 5b) dem Verriegelungsteil (3) in eine Schließrichtung (Z) angenähert wird, bis das Verriegelungselement (4a, 4b) rastend mit dem Hinterschnitt (5a, 5b) in Eingriff gelangt, indem das Verriegelungselement (4a, 4b) und der Hinterschnitt (5a, 5b) entlang der Schließrichtung (Z) aneinander vorbeibewegt werden und dabei das Verriegelungselement (4a, 4b) und/oder der Hinterschnitt (5a, 5b) entlang einer Ausweichrichtung (A) beiseite gedrängt werden,
- das Verriegelungsteil (3) in der Schließstellung mit seinem Verriegelungselement (4a, 4b) mit dem Hinterschnitt (5a, 5b) in Eingriff steht und
- zum Öffnen das Verriegelungsteil (3) in eine von der Ausweichrichtung (A) unterschiedliche Öffnungsrichtung (X) bewegt wird, um das Verriegelungselement (4a, 4b) und den Hinterschnitt (5a, 5b) außer Eingriff voneinander zu bringen
**dadurch gekennzeichnet,**
**dass**.die Öffnungsrichtung (X), die Schließrichtung (Z) und die Ausweichrichtung (A) jeweils voneinander unterschiedlich ist.

2. Tischanordnung (100) nach Anspruch 1, **dadurch gekennzeichnet, dass** das Verriegelungselement (4a, 4b) und/oder der Hinterschnitt (5a, 5b) entlang der Ausweichrichtung (A) elastisch federnd angeordnet sind.

3. Tischanordnung (100) nach Anspruch 1 oder 2, **dadurch gekennzeichnet, dass** das Verriegelungsteil (3) beweglich an dem Basisteil (2) und der Hinterschnitt (5a, 5b) an dem Tisch (1) angeordnet sind.

4. Tischanordnung (100) nach einem der vorangehenden Ansprüche, **dadurch gekennzeichnet, dass** das Verriegelungsteil (3) linear verschiebbar oder um eine Drehachse (8) drehbar an dem Basisteil (2) gelagert ist.

5. Tischanordnung (100) nach Anspruch 4, **dadurch gekennzeichnet, dass** die Drehachse (8) senkrecht zur Schwenkachse (12) gerichtet ist.

6. Tischanordnung (100) nach einem der vorangehenden Ansprüche, **dadurch gekennzeichnet, dass** der Hinterschnitt (5a, 5b) an einer Aussparung (16) des Tischs (1) angeordnet ist und von einem Innenumfang der Aussparung (16) radial nach innen vorspringt.

7. Tischanordnung (100) nach einem der vorangehenden Ansprüche, **dadurch gekennzeichnet, dass** ein Führungselement (9a, 9b) vorgesehen ist, das den Tisch (1) beim Bewegen in die Schließrichtung (Z) zumindest abschnittsweise derart führt, dass der Tisch (1) nicht quer zur Schließrichtung (Z) ausweichen kann, wenn das Federverrieglungselement (4a, 4b) in Eingriff mit dem Hinterschnitt (5a, 5b) gelangt.

8. Tischanordnung (100) nach einem der vorangehenden Ansprüche, **dadurch gekennzeichnet, dass** beim Bewegen des Verriegelungsteils (3) in die Öffnungsrichtung (X) das Verriegelungselement (4a, 4b)
- in die Öffnungsrichtung (X) außer Eingriff mit dem Hinterschnitt (5a, 5b) geschoben oder
- durch ein kraftumlenkendes Element quer zur Öffnungsrichtung (X) außer Eingriff mit dem Hinterschnitt (5a, 5b) gedrückt
wird.

9. Tischanordnung (100) nach einem der vorangehenden Ansprüche, **dadurch gekennzeichnet, dass** die Tischanordnung (100), insbesondere die Verriegelungsvorrichtung (101), magnetische Mittel (10a, 10b, 11a, 11b) zum Unterstützen des Schließens der Verriegelungsvorrichtung (101) aufweist.

10. Tischanordnung (100) nach einem der vorangehenden Ansprüche, **dadurch gekennzeichnet, dass** an dem Verriegelungsteil (3) ein Magnet (11a, 11b) und an dem Tisch (1) ein ferromagnetischer Anker (10a, 10b) angeordnet ist.

11. Tischanordnung (100) nach Anspruch 10, **dadurch gekennzeichnet, dass** bei einem Bewegen des Verriegelungsteils (3) zum Öffnen der Verriegelungsvorrichtung (101) der Magnet (11a, 11b) relativ zu dem Anker (10a, 10b) bewegt und dadurch eine magnetische Anziehungskraft zwischen dem Magnet (11a, 11b) und dem Anker (10a, 10b) abgeschwächt wird.

12. Tischanordnung (100) nach Anspruch 10 oder 11, **dadurch gekennzeichnet, dass** der Hinterschnitt (5a, 5b) an dem ferromagnetischen Anker (10a, 10b) ausgebildet ist.

13. Tischanordnung (100) nach einem der vorangehenden Ansprüche, **dadurch gekennzeichnet, dass** das Verriegelungsteil (3) durch eine Rückstellfeder (6) elastisch entgegen der Öffnungsrichtung (X) in eine Stellung vorgespannt ist, in der das Verriegelungselement (4a, 4b) mit dem Hinterschnitt (5a, 5b) in Eingriff bringbar ist.

14. Tischanordnung (100) nach Anspruch 13, **dadurch gekennzeichnet, dass** die Rückstellfeder (6) sowohl die Rückstellung des Verriegelungsteils (3) bewirkt als auch eine federelastische Komponente des Verriegelungselements (3) ausbildet.

## Claims

1. A table assembly (100), comprising
- a base part (2),
- a table (1) pivotally mounted on the base part (2) about a pivot axis (12), and
- a locking device (101) which acts between the base part (2) and the table (1) in order to in a closed position hold the table (1) in a position approached to the base part (2) and in an open position release the table (1), so that the table (1) is pivotable about the pivot axis (12) relative to the base part (2) into a position of use,
wherein the locking device (101) includes a locking part (3) which is movably arranged on one of the base part (2) and the table (1) and which comprises a locking element (4a, 4b), and an undercut (5a, 5b) which is arranged on the other one of the base part (2) and the table (1), wherein
- for closing purposes the table (1) pivots about the pivot axis (12) and the undercut (5a, 5b) thus is approached to the locking part (3) in a closing direction (Z), until the locking element (4a, 4b) latchingly gets in engagement with the undercut (5a, 5b) in that the locking element (4a, 4b) and the undercut (5a, 5b) are moved past each other along the closing direction (Z) and the locking element (4a, 4b) and/or the undercut (5a, 5b) thereby are urged aside along a yielding direction (A),
- in the closed position, the locking part (3) is in engagement with the undercut (5a, 5b) with its locking element (4a, 4b), and
- for opening purposes the locking part (3) is moved in an opening direction (X) different from the yielding direction (A) in order to bring the locking element (4a, 4b) and the undercut (5a, 5b) out of engagement with each other,
**characterized in**
**that** the opening direction (X), the closing direction (Z) and the yielding direction (A) each are different from each other.

2. The table assembly (100) according to claim 1, **characterized in that** the locking element (4a, 4b) and/or the undercut (5a, 5b) are arranged to be elastically resilient along the yielding direction (A).

3. The table assembly (100) according to claim 1 or 2, **characterized in that** the locking part (3) is movably arranged on the base part (2) and the undercut (5a, 5b) is movably arranged on the table (1).

4. The table assembly (100) according to any of the preceding claims, **characterized in that** the locking part (3) is mounted on the base part (2) so as to be linearly shiftable or rotatable about an axis of rotation (8).

5. The table assembly (100) according to claim 4, **characterized in that** the axis of rotation (8) is perpendicularly directed with respect to the pivot axis (12).

6. The table assembly (100) according to any of the preceding claims, **characterized in that** the undercut (5a, 5b) is arranged on a cutout (16) of the table (1) and protrudes from an internal circumference of the cutout (16) radially to the inside.

7. The table assembly (100) according to any of the preceding claims, **characterized in that** a guide element (9a, 9b) is provided, which at least sectionally guides the table (1) when moving in the closing direction (Z) such that the table (1) cannot yield transversely to the closing direction (Z) when the spring locking element (4a, 4b) gets in engagement with the undercut (5a, 5b).

8. The table assembly (100) according to any of the preceding claims, **characterized in that** when moving the locking part (3) in the opening direction (X), the locking element (4a, 4b)
- is pushed in the opening direction (X) ouf of engagement with the undercut (5a, 5b), or
- is pushed out of engagement with the undercut (5a, 5b) by a force-deflecting element transversely to the opening direction (X).

9. The table assembly (100) according to any of the preceding claims, **characterized in that** the table assembly (100), in particular the locking device (101), includes magnetic means (10a, 10b, 11a, 11b) to support the closing of the locking device (101).

10. The table assembly (100) according to any of the preceding claims, **characterized in that** on the locking part (3) a magnet (11a, 11b) is arranged and on the table (1) a ferromagnetic armature (10a, 10b) is arranged.

11. The table assembly (100) according to claim 10, **characterized in that** when moving the locking part (3) for opening the locking device (101), the magnet (11a, 11b) is moved relative to the armature (10a, 10b) and a force of magnetic attraction between the magnet (11a, 11b) and the armature (10a, 10b) thereby is attenuated.

12. The table assembly (100) according to claim 10 or 11, **characterized in that** the undercut (5a, 5b) is formed on the ferromagnetic armature (10a, 10b).

13. The table assembly (100) according to any of the preceding claims, **characterized in that** the locking part (3) is elastically pretensioned by a return spring (6) against the opening direction (X) into a position in which the locking element (4a, 4b) can be brought in engagement with the undercut (5a, 5b).

14. The table assembly (100) according to claim 13, **characterized in that** the return spring (6) effects both the return of the locking part (3) and forms a spring-elastic component of the locking element (3).

## Revendications

1. Ensemble formant table (100), avec
- une partie de base (2),
- une table (1) montée au niveau de la partie de base (2) de manière à pouvoir pivoter autour d'un axe de pivotement (12), et
- un dispositif de verrouillage (101), qui agit entre la partie de base (2) et la table (1) pour maintenir dans une position de fermeture la table (1) dans une position rapprochée de la partie de base (1) et pour débloquer dans une position ouverte la table (1) de sorte que la table (1) puisse pivoter autour de l'axe de pivotement (12) dans une position d'utilisation par rapport à la partie de base (2),
dans lequel le dispositif de verrouillage (101) présente une partie de verrouillage (3), qui est disposée de manière mobile au niveau d'un élément parmi la partie de base (2) et la table (1) et qui comprend un élément de verrouillage (4a, 4b), et une contre-dépouille (5a, 5b), qui est disposée au niveau de l'autre élément parmi la partie de base (2) et la table (1), dans lequel
- la table (1) est pivotée autour de l'axe de pivotement (12) aux fins de la fermeture et la contre-dépouille (5a, 5b) est rapprochée ainsi de la partie de verrouillage (3) dans une direction de fermeture (Z) jusqu'à ce que l'élément de verrouillage (4a, 4b) parvienne en prise par enclenchement avec la contre-dépouille (5a, 5b) en ce que l'élément de verrouillage (4a, 4b) et la contre-dépouille (5a, 5b) sont déplacés le long l'un de l'autre le long de la direction de fermeture (Z) et que ce faisant l'élément de verrouillage (4a, 4b) et/ou la contre-dépouille (5a, 5b) sont repoussés le long d'une direction de déviation (A),
- la partie de verrouillage (3) est en prise dans la position de fermeture par son élément de verrouillage (4a, 4b) avec la contre-dépouille (5a, 5b) et
- la partie de verrouillage (3) est déplacée dans une direction d'ouverture (X) différente de la direction de déviation (A) aux fins de l'ouverture pour amener hors prise l'élément de verrouillage (4a, 4b) et la contre-dépouille (5a, 5b) l'un de l'autre
**caractérisé en ce**
**que** la direction d'ouverture (X), la direction de fermeture (Z) et la direction de déviation (A) sont différentes respectivement les unes des autres.

2. Ensemble formant table (100) selon la revendication 1, **caractérisé en ce que** l'élément de verrouillage (4a, 4b) et/ou la contre-dépouille (5a, 5b) sont disposés sur ressorts de manière élastique le long de la direction de déviation (A).

3. Ensemble formant table (100) selon la revendication 1 ou 2, **caractérisé en ce que** la partie de verrouillage (3) est disposée de manière mobile au niveau de la partie de base (2), et la contre-dépouille (5a, 5b) est disposée au niveau de la table (1).

4. Ensemble formant table (100) selon l'une quelconque des revendications précédentes, **caractérisé en ce que** la partie de verrouillage (3) est montée au niveau de la partie de base (2) de manière à pouvoir coulisser linéairement ou de manière à pouvoir tourner autour d'un axe de rotation (8).

5. Ensemble formant table (100) selon la revendication 4, **caractérisé en ce que** l'axe de rotation (8) est dirigé de manière perpendiculaire par rapport à l'axe de pivotement (12).

6. Ensemble formant table (100) selon l'une quelconque des revendications précédentes, **caractérisé en ce que** la contre-dépouille (5a, 5b) est disposée au niveau d'un évidement (16) de la table (1) et fait saillie vers l'intérieur radialement depuis une périphérie intérieure de l'évidement (16).

7. Ensemble formant table (100) selon l'une quelconque des revendications précédentes, **caractérisé en ce qu'**un élément de guidage (9a, 9b) est prévu, qui guide au moins par endroits la table (1) lors du déplacement dans la direction de fermeture (Z) de telle manière que la table (1) ne peut dévier de manière transversale par rapport à la direction de fermeture (Z) quand l'élément de verrouillage à ressorts (4a, 4b) parvient en prise avec la contre-dépouille (5a, 5b).

8. Ensemble formant table (100) selon l'une quelconque des revendications précédentes, **caractérisé en ce que** lors du déplacement de la partie de verrouillage (3) dans la direction d'ouverture (X), l'élément de verrouillage (4a, 4b)
- est glissé dans la direction d'ouverture (X) et est hors prise avec la contre-dépouille (5a, 5b),
ou
- est poussé par un élément de renvoi de force de manière transversale par rapport à la direction d'ouverture (X) et est hors prise avec la contre-dépouille (5a, 5b).

9. Ensemble formant table (100) selon l'une quelconque des revendications précédentes, **caractérisé en ce que** l'ensemble formant table (100), en particulier le dispositif de verrouillage (101), présente des moyens (10a, 10b, 11a, 11b) magnétiques servant à soutenir la fermeture du dispositif de verrouillage (101).

10. Ensemble formant table (100) selon l'une quelconque des revendications précédentes, **caractérisé en ce qu'**un aimant (11a, 11b) est disposé au niveau de la partie de verrouillage (3) et un système d'ancrage (10a, 10b) ferromagnétique est disposé au niveau de la table (1).

11. Ensemble formant table (100) selon la revendication 10, **caractérisé en ce que** lors d'un déplacement de la partie de verrouillage (3) pour ouvrir le dispositif de verrouillage (101), l'aimant (11a, 11b) est déplacé par rapport au système d'ancrage (10a, 10b) et une force d'attraction magnétique est de ce fait affaiblie entre l'aimant (11a, 11b) et le système d'ancrage (10a, 10b).

12. Ensemble formant table (100) selon la revendication 10 ou 11, **caractérisé en ce que** la contre-dépouille (5a, 5b) est réalisée au niveau du système d'ancrage (10a, 10b) ferromagnétique.

13. Ensemble formant table (100) selon l'une quelconque des revendications précédentes, **caractérisé en ce que** la partie de verrouillage (3) est précontrainte par un ressort de rappel (6) de manière élastique à l'encontre de la direction d'ouverture (X) dans une position, dans laquelle l'élément de verrouillage (4a, 4b) peut être amené en prise avec la contre-dépouille (5a, 5b).

14. Ensemble formant table (100) selon la revendication 13, **caractérisé en ce que** le ressort de rappel (6) entraîne à la fois le rappel de la partie de verrouillage (3) et réalise également une composante élastique à la manière d'un ressort de l'élément de verrouillage (3).
